# EUROPEAN PATENT APPLICATION

(11) **EP 4 618 271 A1**
(43) Date of publication of application: **17.09.2025**
(21) Application number: 24215239.5
(22) Date of filing: 25.11.2024
(51) Int. Cl.: H01M 50/209, H01M 50/342

(54) **BATTERY CELL AND BATTERY MODULE INCLUDING THE SAME**

(30) Priority: 12.03.2024 KR 20240034425
(71) Applicant: Samsung SDI Co., Ltd., Yongin-si, Gyeonggi-do 17084 (KR)
(72) Inventor: CHO, Man Sik, 16678 Suwon-si (KR); KIM, Yoon Sung, 16678 Suwon-si (KR)
(74) Representative: Marks & Clerk LLP

(57) **Abstract**

A battery cell includes an electrode assembly, a cell case accommodating the electrode assembly and having a vent hole, a vent member sealing the vent hole and configured to be opened if an internal pressure of the cell case increases, a blocking member installed in the vent hole and covering the vent member, and a guide member installed in the vent hole and configured to guide the blocking member in opening if the vent member is opened.

## Description

### BACKGROUND

### 1. Field

Embodiments of the present disclosure relate to a battery cell and a battery module including the same.

### 2. Discussion of Related Art

Secondary batteries (also called rechargeable batteries) are batteries that can be discharged and recharged, unlike primary batteries that cannot be recharged. Low-capacity secondary batteries are used in small, portable electronic devices such as smartphones, feature phones, laptop computers, digital cameras, and camcorders, and high-capacity secondary batteries are widely used as power sources for driving motors in hybrid vehicles, electric vehicles, *etc.,* and as batteries for power storage.

Such a secondary battery may include an electrode assembly including (e.g., consisting of) a positive electrode and a negative electrode, a case accommodating the electrode assembly, an electrode terminal connected to the electrode assembly, and/or the like.

Secondary batteries may be used as battery modules or battery packs formed with multiple unit battery cells connected in series and/or parallel to provide high energy density. Battery modules or battery packs may be formed by connecting electrode terminals of a plurality of the unit battery cells to each other in order to meet a desired or required amount of power and, for example, to implement high-output secondary batteries for electric vehicles.

The above-described information is only intended to improve understanding of the background of the present disclosure, and thus may include information that does not constitute the prior art.

### SUMMARY

Aspects of one or more embodiments of the present disclosure are directed towards providing a battery cell that can prevent or reduce the likelihood of a chain ignition of battery cells and ensure smooth venting performance, and a battery module including the same.

Additional aspects will be set forth in part in the description which follows and, in part, will be apparent from the description, or may be learned by practice of the presented embodiments of the disclosure.

According to one or more embodiments of the present disclosure, a battery cell includes an electrode assembly, a cell case accommodating the electrode assembly, the cell case having a vent hole, a vent member sealing the vent hole and configured and/or operable to be opened if (*e.g.,* when) an internal pressure of the cell case increases to a pressure equal to or exceeding a set or threshold pressure, a blocking member installed in the vent hole and covering the vent member, and a guide member installed in the vent hole and configured and/or operable to guide the blocking member to an open position if (*e.g.,* when) the vent member is opened.

In one or more embodiments of the present disclosure, the guide member may include a guide body arranged inside the blocking member and having a first end portion in contact with the vent member and a second end portion opposite to the first end portion.

In one or more embodiments of the present disclosure, a thickness of the guide body may increase from the second end portion toward the first end portion.

In one or more embodiments of the present disclosure, the second end portion may be exposed to an outside of the blocking member.

In one or more embodiments of the present disclosure, the vent member may include a vent plate fixed to the cell case and facing the vent hole, and a cut-off portion on the vent plate and comprising a cut-off line to be cut-off if (*e.g.,* when) the internal pressure of the cell case increases, and the first end portion may be in contact with the cut-off portion.

In one or more embodiments of the present disclosure, the first end portion may face the cut-off line and extend along the cut-off line.

In one or more embodiments of the present disclosure, the vent member may further include a notch concavely recessed into the cut-off portion and extending along the cut-off line.

In one or more embodiments of the present disclosure, the first end portion may be inserted into the notch.

In one or more embodiments of the present disclosure, the guide body may further include a third end portion in contact with an inner surface of the vent hole.

In one or more embodiments of the present disclosure, the blocking member may be configured and/or operable to be injected into the vent hole in a liquid state and then cured.

In one or more embodiments of the present disclosure, the blocking member may include at least one of silicone, epoxy, urethane, and/or polyurethane.

In one or more embodiments of the present disclosure, the guide member may further include a dispersion hole passing through the guide body.

In one or more embodiments of the present disclosure, the dispersion hole may be provided as a plurality of dispersion holes, and the plurality of dispersion holes may be spaced and/or apart (*e.g.,* spaced apart or separated) from each other in an extension direction of the guide body.

The guide member may be configured and/or operable to be separated from the blocking member after the blocking member is cured.

In one or more embodiments of the present disclosure, the thickness of the guide body may decrease from the second end portion toward the first end portion.

In one or more embodiments of the present disclosure, the guide member may further include a grip portion extending from the second end portion and protruding to the outside of the blocking member.

According to one or more embodiments of the present disclosure, a battery module includes a module housing, and one or more battery cells inside the module housing, wherein each of the battery cells includes an electrode assembly, a cell case accommodating the electrode assembly, the cell case having a vent hole, a vent member sealing the vent hole and configured and/or operable to be opened if (*e.g.,* when) an internal pressure of the cell case increases to a pressure equal to or exceeding a set or threshold pressure, a blocking member installed in the vent hole and covering the vent member, and a guide member installed in the vent hole and configured and/or operable to guide the blocking member to an open position if (*e.g.,* when) the vent member is opened.

In one or more embodiments of the present disclosure, the battery module may further include a bus bar holder inside the module housing and supporting a bus bar connected to the battery cell, and a holder vent hole passing through the bus bar holder and facing the vent hole.

In one or more embodiments of the present disclosure, a cross-sectional area of the holder vent hole may be smaller than a cross-sectional area of the vent hole.

At least some of the above and other features of the invention are set out in the claims.

### BRIEF DESCRIPTION OF THE DRAWINGS

The drawings attached to this specification illustrate certain embodiments of the present disclosure, and further describe aspects and features of the present disclosure together with the detailed description of the present disclosure. However, the present disclosure should not be construed as being limited to the drawings.

The above and other objects, features and/or principles of the present disclosure will become more apparent to those of ordinary skill in the art by the following description of embodiments with reference to the accompanying drawings, in which:
FIG. 1 is a perspective view schematically illustrating a configuration of a battery module according to one or more embodiments of the present disclosure;
FIG. 2 is a perspective view schematically illustrating a configuration of a battery cell of FIG. 1, according to one or more embodiments of the present disclosure;
FIG. 3 is a plan view schematically illustrating the configuration of the battery cell of FIG. 2, according to one or more embodiments of the present disclosure;
FIG. 4 is a cross-sectional view schematically illustrating the configuration of the battery cell of FIG. 2, according to one or more embodiments of the present disclosure;
FIG. 5 is an enlarged view schematically illustrating a configuration of a vent member according to one or more embodiments of the present disclosure;
FIG. 6 is a cross-sectional view schematically illustrating the configuration of the vent member of FIG. 5, according to one or more embodiments of the present disclosure;
FIG. 7 is a perspective view schematically illustrating a configuration of a guide member according to one or more embodiments of the present disclosure;
FIG. 8 is a plan view schematically illustrating the configuration of the guide member of FIG. 7, according to one or more embodiments of the present disclosure;
FIG. 9 is a cross-sectional view schematically illustrating the configuration of the guide member of FIG. 7, according to one or more embodiments of the present disclosure;
FIGS. 10 and 11 are perspective views schematically illustrating a process of injecting a blocking member into a vent hole including the guide member of FIG. 7, according to one or more embodiments of the present disclosure;
FIG. 12 is an enlarged perspective view schematically illustrating a configuration of a bus bar holder and a holder vent hole according to one or more embodiments of the present disclosure;
FIG. 13 is a cross-sectional view schematically illustrating a configuration of a guide member according to one or more embodiments of the present disclosure;
FIG. 14 is a cross-sectional view schematically illustrating a configuration of a guide member according to one or more embodiments of the present disclosure;
FIG. 15 is a perspective view schematically illustrating a configuration of a guide member according to one or more embodiments of the present disclosure;
FIG. 16 is a view schematically illustrating a state in which a blocking member is injected into a vent hole including the guide member of FIG. 15, according to one or more embodiments of the present disclosure;
FIG. 17 is a perspective view schematically illustrating a configuration of a guide member according to one or more embodiments of the present disclosure;
FIG. 18 is a cross-sectional view schematically illustrating the configuration of the guide member of FIG. 17, according to one or more embodiments of the present disclosure;
FIGS. 19 and 20 are views schematically illustrating a process of injecting a blocking member into a vent hole including the guide member of FIG. 17, according to one or more embodiments of the present disclosure; and
FIG. 21 is a view schematically illustrating a state in which the guide member is separated from the blocking member according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

It is to be understood that when an element, such as an area, layer, film, region or portion, is referred to as being "on," "connected to," or "coupled to" another element, it may be directly on, connected, or coupled to the other element or one or more intervening elements may also be present. When an element is referred to as being "directly on," "directly connected to," or "directly coupled to" another element, there are no intervening elements present. For example, when a first element is described as being "coupled" or "connected" to a second element, the first element may be directly coupled or connected to the second element or the first element may be indirectly coupled or connected to the second element via one or more intervening elements. In addition, it will also be understood that when an element is referred to as being "between" two elements, it can be the only element between the two elements, or one or more intervening elements may also be present.

In the drawings, dimensions of the various elements, layers, *etc.* may be exaggerated for clarity of illustration. Unless otherwise noted, like reference numerals denote like elements throughout the attached drawings and the written description, and thus, duplicative descriptions thereof may not be provided.

As used herein, the term "and/or" includes any and all combinations of one or more of the associated listed items. Further, the use of "may" when describing embodiments of the present disclosure refers to "one or more embodiments of the present disclosure." Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the terms "use," "using," and "used" may be considered synonymous with the terms "utilize," "utilizing," and "utilized," respectively.

As used herein, the terms "substantially," "about," and similar terms are used as terms of approximation and not as terms of degree, and are intended to account for the inherent variations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

It is to be understood that, although the terms "first," "second," "third," *etc.,* may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the scope of the present disclosure.

Spatially relative terms, such as "beneath," "below," "lower," "above," "upper," and the like, may be used herein for ease of explanation to describe one element or feature's relationship to another element(s) or feature(s) as illustrated in the drawings. It is to be understood that the spatially relative terms are intended to encompass different orientations of the device in use or operation, in addition to the orientation depicted in the drawings. For example, if the device in the drawings is turned over, elements described as "below" or "beneath" other elements or features would then be oriented "above" or "over" the other elements or features. Thus, the example term "below" may encompass both an orientation of above and below. The device may be otherwise oriented (*e.g.,* rotated 90 degrees or at other orientations), and the spatially relative descriptors used herein should be interpreted accordingly.

The terminology used herein is for the purpose of describing particular embodiments of the present disclosure and is not intended to be limiting of the present disclosure. As used herein, the singular forms "a," "an" and "the" are intended to include the plural forms as well, unless the context clearly indicates otherwise. It is to be further understood that the terms "includes," "including," "comprises," and/or "comprising," when used in this specification, specify the presence of the stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

References to two compared elements, features, *etc.* as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) "above (or below)" or "on (or under)" a component, it may mean that the arbitrary element is placed in contact with the upper (or lower) surface of the component and may also mean that another component may be interposed between the component and any arbitrary element arranged (or located or positioned) above (or below) or on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to the other part or one or more intervening parts may be present therebetween such that the part and the other part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

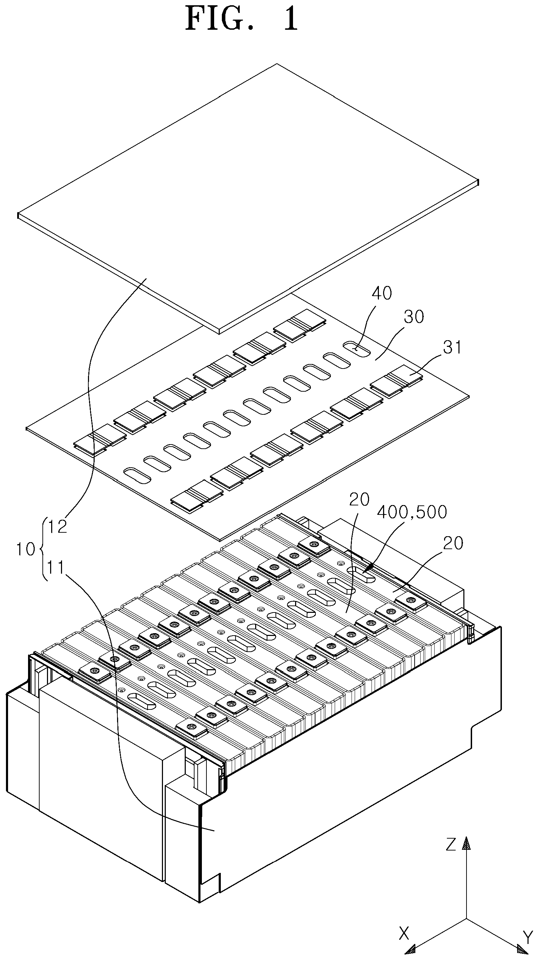

FIG. 1 is a perspective view schematically illustrating a configuration of a battery module according to one or more embodiments of the present disclosure.

Referring to FIG. 1, the battery module according to one or more embodiments may include a housing 10 and a battery cell 20.

The housing 10 may function as a component that supports the battery cell 20 and protects the battery cell 20 from external impacts and foreign substances.

A longitudinal direction of the housing 10 to be described in more detail below may be a direction parallel to an X-axis with respect to FIG. 1, and a width direction of the housing 10 may be a direction parallel to a Y-axis with respect to FIG. 1.

The housing 10 may include a housing body 11 and a housing cover 12.

The housing body 11 may provide a space for accommodating the battery cell 20 therein. The housing body 11 according to one or more embodiments may have, e.g. may be formed to have, the shape of a box with an empty interior and an open side. For example, the open side of the housing body 11 may be arranged to face upward with respect to FIG. 1. A cross-sectional shape of the housing body 11 is not limited to a quadrilateral shape illustrated in FIG. 1, and the cross-sectional shape of the housing body 11 may be changed to one or more other suitable shapes such as a polygonal shape, a circular shape, an elliptical shape, and/or the like.

The housing cover 12 may be coupled to the housing body 11 and close the internal space of the housing body 11. The housing cover 12 according to one or more embodiments may have, e.g. may be formed to have, a plate shape or substantially plate shape (e.g., substantially in the shape of a plate). The housing cover 12 may be arranged to face the open side of the housing body 11, for example, an upper surface of the housing body 11. The housing cover 12 may be fixed to the housing body 11 by one or more suitable types (kinds) of coupling methods such as bolting, welding, fitting, and/or the like.

The battery cell 20 may function as a unit structure that stores and supplies power in the battery module. The battery cell 20 may be arranged inside the housing 10.

The battery cell 20 may be provided as one or more battery cells 20. Although FIG. 1 illustrates an example in which the battery cell 20 is provided as a plurality of battery cells 20, the battery cell 20 is not limited thereto, and may also be provided as a single battery cell 20.

When the battery cell 20 is provided as a plurality of battery cells 20, the plurality of battery cells 20 may be arranged in a plurality of columns inside the housing 10. For example, the plurality of battery cells 20 may be arranged in a plurality of columns in the longitudinal direction of the housing 10 (X-axis direction with respect to FIG. 1). However, the arrangement of the plurality of battery cells 20 is not limited thereto, and the plurality of battery cells 20 may alternatively be arranged in a plurality of columns in the width direction of the housing 10 (Y-axis direction with respect to FIG. 1) or may be arranged in a plurality of columns in the longitudinal and width directions (X-axis direction and Y-axis direction with respect to FIG. 1) of the housing 10.

Hereinafter, an example in which the battery cell 20 is a lithium ion secondary battery and has a prismatic shape will be described. However, the present disclosure is not limited thereto, and the battery cell 20 may be a lithium polymer battery or a cylindrical battery.

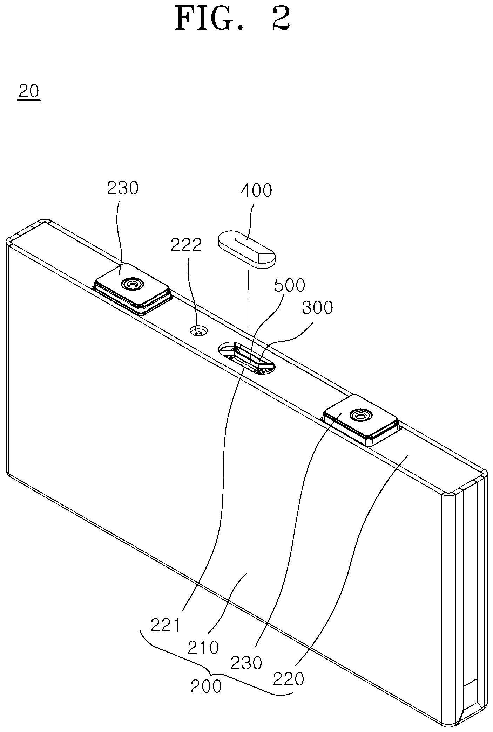

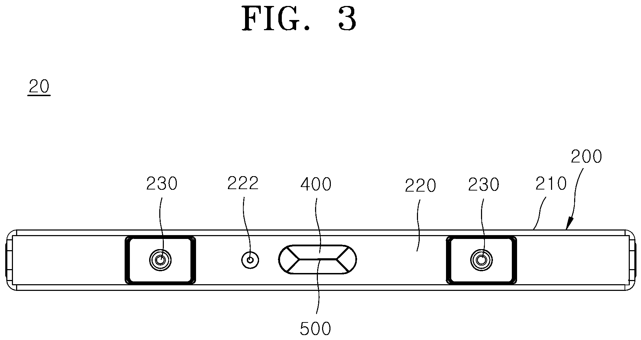

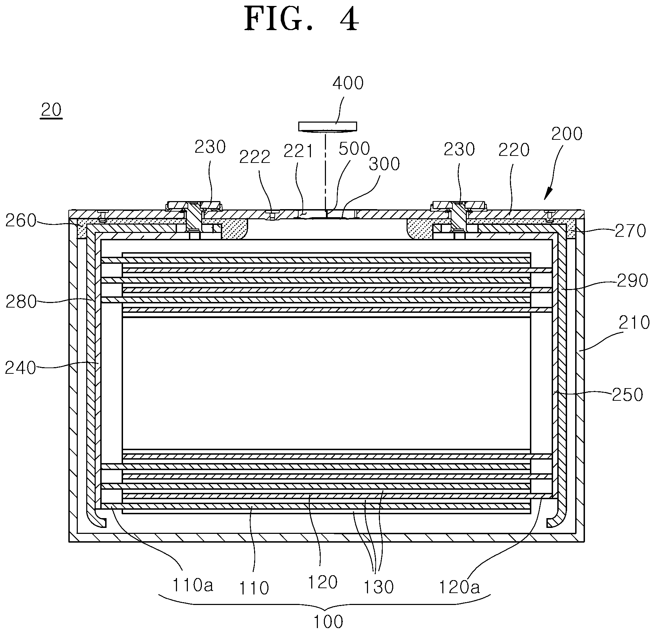

FIG. 2 is a perspective view schematically illustrating a configuration of a battery cell 20 of FIG. 1, according to one or more embodiments of the present disclosure, FIG. 3 is a plan view schematically illustrating the configuration of the battery cell 20 of FIG. 2, according to one or more embodiments of the present disclosure, and FIG. 4 is a cross-sectional view schematically illustrating the configuration of the battery cell 20 of FIG. 2, according to one or more embodiments of the present disclosure.

Referring to FIGS. 2 to 4, the battery cell 20 according to one or more embodiments of the present embodiment includes an electrode assembly 100, a cell case 200, a vent member 300, a blocking member 400, and a guide member 500.

The electrode assembly 100 may include a positive electrode 110, a negative electrode 120, and a separator 130 arranged between the positive electrode 110 and the negative electrode 120.

The positive electrode 110 and the negative electrode 120 may include coated portions, which are regions where a current collector formed of a thin metal foil is coated with an active material, and uncoated portions 110a and 120a, respectively, which are regions where a current collector is not coated with the active material.

The electrode assembly 100 may be wound in the form of a jelly roll after the separator 130, which is an insulator, is interposed between the positive electrode 110 and the negative electrode 120. However, the electrode assembly 100 is not limited to such a shape, and may be formed in a stack structure in which the positive electrode 110 and the negative electrode 120, that each are made of a plurality of sheets, are alternately stacked with the separator 130 interposed therebetween.

The electrode assembly 100 may be formed as a single electrode assembly or may be provided as a plurality of electrode assemblies 100.

The cell case 200 may form an overall exterior of the battery cell 20. The cell case 200 may accommodate the electrode assembly 100 therein. The cell case 200 may include a conductive metal material such as aluminum, an aluminum alloy, and/or nickel-plated steel.

The cell case 200 according to one or more embodiments may include a case body 210 and a cap plate 220.

The case body 210 may have, e.g. may be formed to have, the shape of a rectangular parallelepiped with one open surface. The open surface of the case body 210 may be arranged to face upward from the inside of the housing 10 and arranged to face the housing cover 12.

The cap plate 220 may be coupled to the case body 210 and seal the cell case 200. For example, the cap plate 220 may have, e.g. may be formed to have, the shape of a flat plate. The cap plate 220 may be arranged on an upper side of the case body 210 to cover the open side of the case body 210. The cap plate 220 may be coupled to the case body 210 by one or more suitable types (kinds) of coupling methods such as welding, bolting, fitting, and/or the like.

The cell case 200 may further include a cell terminal 230.

The cell terminal 230 may be installed to pass through the cap plate 220 and protrude to the outside of the cap plate 220. An outer circumferential surface of an upper pillar of the cell terminal 230 may be threaded and fixed to the cap plate 220 with a nut. However, the present disclosure is not limited thereto, and the cell terminal 230 may have a rivet structure and may be riveted, or may be coupled to the cap plate 220 by welding.

The cell terminal 230 protruding to the outside of the cap plate 220 may be formed as a pair of cell terminals 230. One of the pair of cell terminals 230 may be connected to the positive electrode 110 and the other of the pair of cell terminals 230 may be connected to the negative electrode 120 of the electrode assembly 100. Accordingly, the pair of cell terminals 230 may function as a positive terminal and a negative terminal of the battery cell 20, respectively.

For example, the cell terminals 230 may be electrically connected to a first current collector 240 and a second current collector 250 that are respectively welded to a positive electrode uncoated portion 110a and a negative electrode uncoated portion 120a. The first current collector 240 and the second current collector 250 may function as a positive current collector and a negative current collector of the battery cell 20, respectively. More specifically, one of the pair of cell terminals 230 may be coupled to the first current collector 240 and the other of the pair of cell terminals 230 may be connected to the second current collector 250 by welding. However, the present disclosure is not limited thereto, and the cell terminals 230 and the first and second current collectors 240 and 250 may be integrally coupled and formed.

The cell case 200 may further include a vent hole 221.

The vent hole 221 may have, e.g. may be formed to have, the shape of a hole that passes through the cap plate 220, e.g. vertically through both surfaces (e.g., opposite surfaces) of the cap plate 220. The vent hole 221 may function as a component that provides a path through which flames, gas, smoke, and/or the like, formed inside the cell case 200 may be discharged from the battery cell 20 if (e.g., when) thermal runaway of the battery cell 20 occurs. A lower side of the vent hole 221 may be connected to an internal space of the case body 210. An upper side of the vent hole 221 may be connected to an external space the cap plate 220. As shown, the vent hole 221 has an oblong shape in cross section. However, the present disclosure is not limited thereto, and a cross-sectional shape of the vent hole 221 may be changed to one or more other suitable shapes such as an oval shape, a circular shape, a polygonal shape, and/or the like.

The cell case 200 may further include an electrolyte injection port 222 that is formed to pass through the cap plate 220 and in which a sealing stopper can be installed.

An insulating member may be installed between the electrode assembly 100 and the cap plate 220. The insulating member may include a first lower insulating member 260 and a second lower insulating member 270, and each of the first lower insulating member 260 and the second lower insulating member 270 may be installed between the electrode assembly 100 and the cap plate 220.

One end of a separation member that can be installed to face one side surface of the electrode assembly 100 may be installed between the insulating members 260,270 and the cell terminal 230.

The separation member may include a first separation member 280 and a second separation member 290.

One end of the first separation member 280 and one end of the second separation member 290 that can be installed to face one side surface of the electrode assembly 100 may be installed between the first and second lower insulating members 260 and 270, respectively, and the pair of cell terminals 230.

The pair of cell terminals 230 welded to the first current collector 240 and the second current collector 250 may be respectively coupled to one end of the first lower insulating members 260 and one end of the second lower insulating member 270 and to one end of the first separation members 280 and one end of the second separation member 290, respectively.

The vent member 300 may be installed in the vent hole 221 and may be opened or closed in response to changes in an internal pressure of the cell case 200. For example, the vent member 300 may maintain a closed state to seal the vent hole 221 during normal operation of the battery cell 20. The vent member 300 may be opened if (e.g., when) the internal pressure of the cell case 200 increases to the pressure equal to or exceeding the set or threshold pressure due to overcharging of the battery cell 20, a fire, and/or the like, and may allow flames, gas, smoke, and/or the like, generated from the inside of the cell case 200 to be discharged to the outside of the cell case 200.

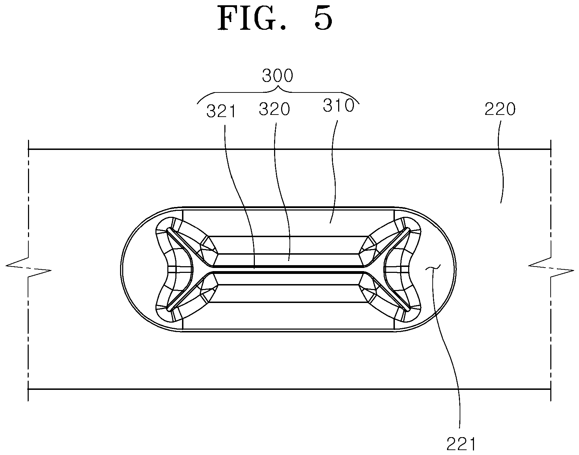

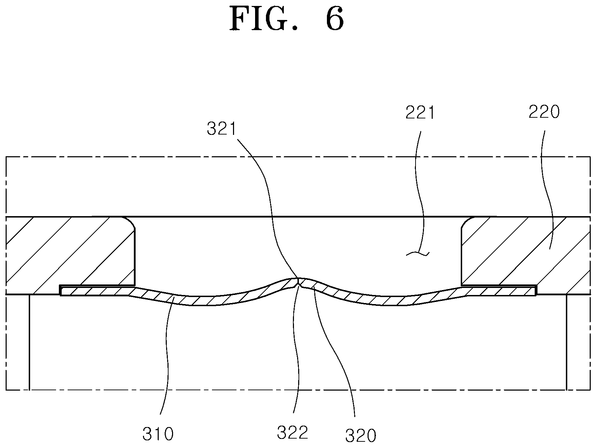

FIG. 5 is an enlarged view schematically illustrating a configuration of the vent member 300 according to one or more embodiments of the present disclosure, and FIG. 6 is a cross-sectional view schematically illustrating the configuration of the vent member 300 of FIG. 5, according to one or more embodiments of the present disclosure.

Referring to FIGS. 5 and 6, the vent member 300 according to one or more embodiments may include a vent plate 310 and a cut-off portion 320.

The vent plate 310 may be fixed to the cell case 200 and arranged to face the vent hole 221. The vent plate 310 according to one or more embodiments may have, may be formed to have, a plate shape or substantially plate shape. The vent plate 310 may be arranged below the cap plate 220. An upper surface of the vent plate 310 may be arranged to face a lower end portion of the vent hole 221 (*e.g.,* in a direction from a bottom of the case body 210 to the cap plate 220). An area of the vent plate 310 may be greater than a cross-sectional area of the vent hole 221. The upper surface of the vent plate 310 may be fixed to a lower surface of the cap plate 220 by one or more suitable types (kinds) of coupling methods such as welding, bolting, fitting, and/or the like. A thickness of the vent plate 310 may be less than a thickness of the cap plate 220. Accordingly, if (*e.g.,* when) the internal pressure of the cell case 200 increases to the pressure equal to or exceeding the set or threshold pressure, the vent plate 310 may easily rupture or be cut-off (*e.g.,* be broken by the increased pressure inside the cell case 200).

The cut-off portion 320 may form a partial exterior of the vent plate 310. When the internal pressure of the cell case 200 increases to the pressure equal to or exceeding the set or threshold pressure, the cut-off portion 320 may open the vent plate 310 along a cut-off line 321.

The cut-off line 321 may be a linear region that is preferentially cut-off (*e.g.,* broken or ruptured) if (*e.g.,* when) the internal pressure of the cell case 200 increases to the pressure equal to or exceeding the set or threshold pressure. For example, as illustrated in FIG. 5, a central portion of the cut-off line 321 may have the shape of a straight line that crosses the vent plate 310 in the width direction of the housing 10, and both sides (*e.g.,* opposite sides) of the cut-off line 321 may have the shape of branching into a pair of strands (lines) from an end portion of the central portion of the cut-off line 321. However, the shape of the cut-off line 321 is not limited thereto, and the cut-off line 321 may alternatively take the form of one or more other suitable shapes.

The cut-off portion 320 according to one or more embodiments may be a partial region arranged on both sides (*e.g.*, opposite sides) of the cut-off line 321 with respect to the cut-off line 321. The cut-off portion 320 may be cut-off (*e.g.,* broken or ruptured) to both sides (*e.g.,* opposite sides) of the cut-off line 321 with respect to the cut-off line 321 by the pressure applied from the internal space of the cell case 200.

The cut-off portion 320 may protrude, e.g. protrude convexly, from the vent plate 310 toward the vent hole 221. The cut-off portion 320 may have, e.g. may be formed to have, a width that becomes narrower toward an upper end portion thereof (*e.g.,* an upper end of the cut-off portion 320 protruding towards or into the vent hole 221). The cut-off line 321 may be arranged on the upper end portion of the cut-off portion 320. Accordingly, if (*e.g.,* when) the internal pressure of the cell case 200 increases, the pressure applied from the inside of the cell case 200 is concentrated on the upper end portion of the cut-off portion 320 on which the cut-off line 321 is arranged, and the cut-off portion 320 may be more easily cut-off (*e.g.,* more easily broken or ruptured by the increased pressure inside the cell case 200 equal to or exceeding the set or threshold pressure) along the cut-off line 321. However, the shape of the cut-off portion 320 is not limited thereto, and the cut-off portion 320 may have, e.g. may be formed to have, the shape of a flat plate e.g. parallel or substantially parallel, to the vent plate 310.

The vent member 300 may further include a notch 322.

The notch 322 may be formed in the cut-off portion 320, and may guide the cut-off operation (*e.g.,* the breakage or rupture) of the cut-off portion 320 if (*e.g.,* when) the internal pressure of the cell case 200 increases. For example, the notch 322 may function as a component that guides the cut-off portion 320 to be more easily cut-off (*e.g.,* broken or ruptured) along the cut-off line 321.

The notch 322 according to one or more embodiments may have, e.g. may be formed to have, the shape of a groove that is formed to be recessed, e.g. concavely recessed, upward from the lower surface of the cut-off portion 320. The notch 322 may be arranged on the upper end portion the cut-off portion 320 to face the cut-off line 321. The notch 322 may extend along the cut-off line 321 on the lower surface of the cut-off portion 320. The notch 322 may have, e.g. may be formed to have, a cross-sectional area that gradually becomes narrower (thinner) toward the cut-off line 321.

A thickness of a region of the cut-off portion 320 in which the notch 322 is formed may be less than a thickness of the remaining region of the cut-off portion 320, i.e. the region in which the notch 322 is not formed. Accordingly, the notch 322 may guide the cut-off portion 320 to be more easily cut-off along the cut-off line 321 if (*e.g.,* when) the internal pressure of the cell case 200 increases.

The blocking member 400 may be installed in the vent hole 221 and cover the vent member 300. The blocking member 400 may function as a component that blocks flames, gas, smoke, foreign substances, and/or the like, generated outside the battery cell 20 from being introduced into the vent hole 221 or coming into direct contact with the vent member 300. Accordingly, if (*e.g.,* when) a fire occurs in any one battery cell 20, the blocking member 400 may prevent or reduce the likelihood of a plurality of battery cells 20 from sequentially igniting due to flames, gas, smoke, and/or the like that is introduced into the vent holes 221 of the battery cells 20 adjacent to the battery cell 20 that is releasing flames, gas, smoke, and/or the like.

The blocking member 400 may be injected into the vent hole 221 in a liquid state and then cured in a solid state. Accordingly, an internal space of the vent hole 221 may be filled with the blocking member 400 without any gaps, regardless of the curvature and cross-sectional shape of the vent hole 221. The blocking member 400 may include a highly heat-resistant material, for example, at least one of silicone, epoxy, urethane, and/or polyurethane.

The blocking member 400 may be provided as a plurality of blocking members 400. The respective blocking members 400 may be installed in the vent holes 221 of the respective battery cells 20.

The guide member 500 may be installed in the vent hole 221 and guide the blocking member 400 to be opened if (*e.g.,* when) the vent member 300 is opened. For example, the guide member 500 may function as a component that guides the blocking member 400 to be opened together with the vent member 300 if (*e.g.,* when) the vent member 300 is opened due to an increase in the internal pressure of the cell case 200. Accordingly, if (*e.g.,* when) any one battery cell 20 ignites, the guide member 500 may prevent or reduce the likelihood of a chain ignition of the battery cells 20 due to explosion of one battery cell 20 by guiding gas and/or the like generated from the one battery cell 20 to be smoothly discharged.

The guide member 500 may be provided as a plurality of guide members 500. The respective guide members 500 may be installed in the vent holes 221 of the respective battery cells 20.

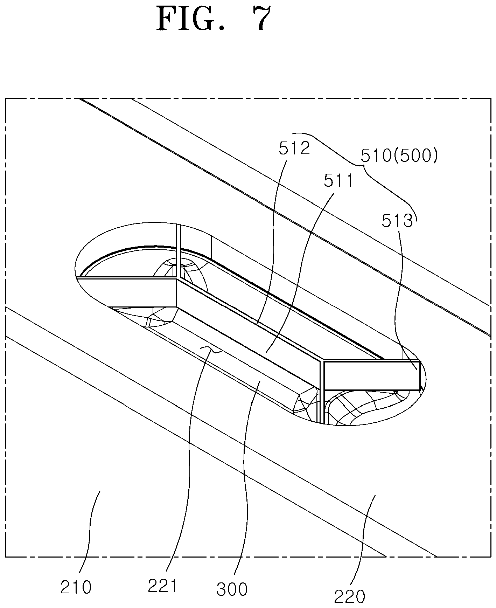

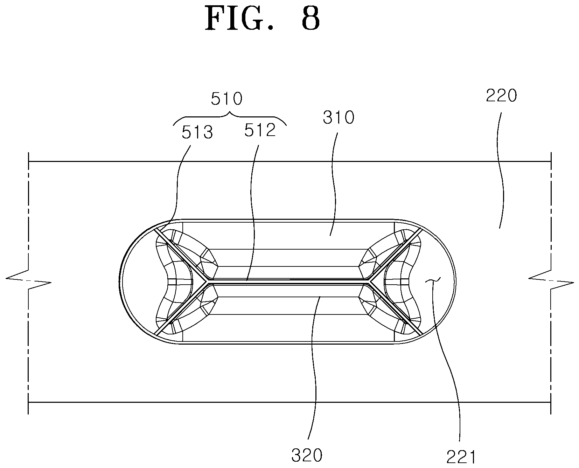

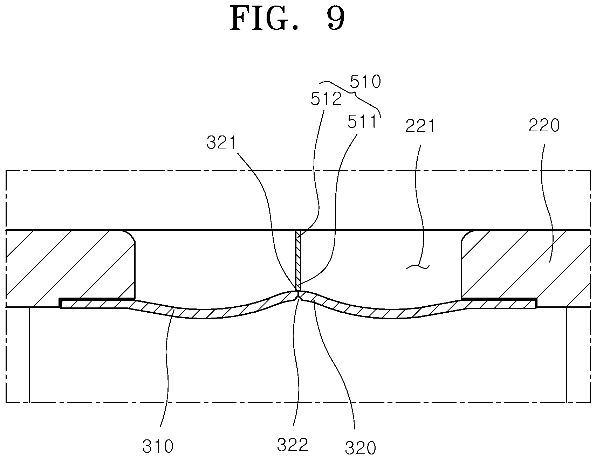

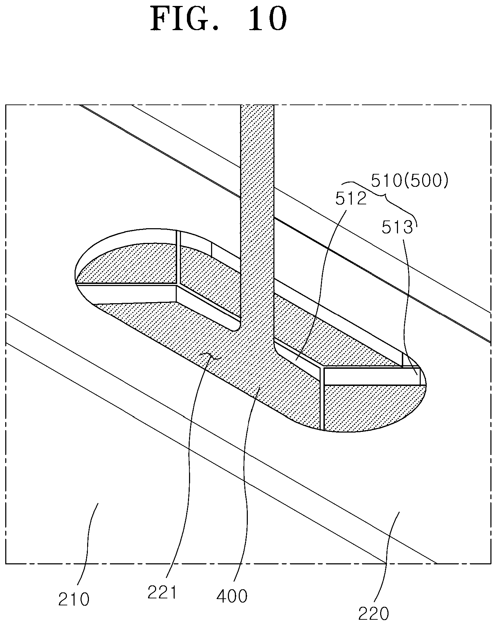

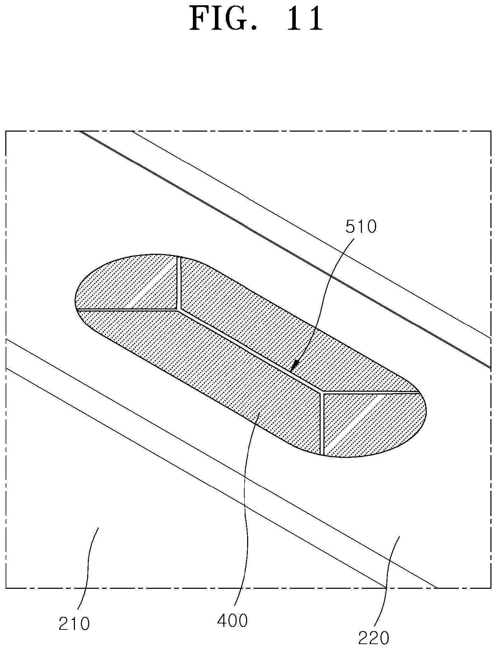

FIG. 7 is a perspective view schematically illustrating a configuration of a guide member 500 according to one or more embodiments of the present disclosure, FIG. 8 is a plan view schematically illustrating the configuration of the guide member 500 of FIG. 7, according to one or more embodiments of the present disclosure, FIG. 9 is a cross-sectional view schematically illustrating the configuration of the guide member 500 of FIG. 7, according to one or more embodiments of the present disclosure, and FIGS. 10 and 11 are views schematically illustrating a process of injecting the blocking member 400 into the vent hole 221 including the guide member 500 of FIG. 7, according to one or more embodiments of the present disclosure.

Referring to FIGS. 1 to 11, the guide member 500 according to one or more embodiments may include a guide body 510.

The guide body 510 may be arranged inside the blocking member 400. For example, the guide body 510 may be inserted into the vent hole 221 before the blocking member 400 is injected into the vent hole 221, and seated on the vent member 300. Because the blocking member 400 is injected into the vent hole 221 and cured, the guide body 510 may be fixed while arranged inside the blocking member 400. For example, the guide body 510 may function as a component that forms a region with relatively weakened strength inside the blocking member 400 or forms a preliminary incision line, if (*e.g.,* when) the blocking member 400 is cured. Accordingly, the blocking member 400 may be easily opened along a boundary region with the guide body 510 by the pressure of gas and/or the like discharged from the vent member 300 if (*e.g.,* when) the vent member 300 is opened.

The guide body 510 may have, e.g. may be formed to have, a thin film or sheet shape. The guide body 510 may be made of one or more suitable types (kinds) of materials, such as plastic, a synthetic resin, paper material, and/or the like, that can maintain its own shape during the injection process of the blocking member 400 and which may prevent or reduce the likelihood of deformation due to heat.

The guide body 510 may include a first end portion 511 and a second end portion 512.

The first end portion 511 may be a region in direct contact with the vent member 300. For example, with reference to FIGS. 7 to 9, the first end portion 511 may be a region of a lower end portion of the guide body 510.

The first end portion 511 may be in contact with the cut-off portion 320. More specifically, the first end portion 511 may be arranged to face the cut-off line 321, may extend along the cut-off line 321, and may be seated on the cut-off line 321. For example, a cross-sectional shape of the first end portion 511 parallel to an X-Y plane with respect to FIG. 1 may correspond to a cross-sectional shape of the cut-off line 321 parallel to the X-Y plane. Accordingly, the guide body 510 may match the open region of the blocking member 400 with the open region of the vent member 300 and ensure that the opening pressure of the vent member 300 is uniformly (*e.g.,* substantially uniformly) transmitted throughout the first end portion 511 of the guide body 510.

The second end portion 512 may be positioned opposite to the first end portion 511. For example, with reference to FIGS. 7 to 9, the first end portion 511 may be a lower end region of the guide body 510 and the second end portion 512 may be an upper end region of the guide body 510.

The second end portion 512 may pass through an upper end portion of the blocking member 400 and be exposed to the outside of the blocking member 400. Accordingly, the guide body 510 may pass through the blocking member 400 both upward and downward and guide the blocking member 400 to be more easily opened if (*e.g.,* when) the vent member 300 is opened. A cross-sectional shape of the second end portion 512 parallel to the X-Y plane may be formed to correspond to the cross-sectional shape of the first end portion 511 parallel to the X-Y plane.

In one or more embodiments, a width of the guide body 510 crossing an extension direction of the cut-off line 321 may be constant. For example, the width of the guide body 510 may be maintained constant without increasing or decreasing from the second end portion 512 toward the first end portion 511.

The guide body 510 may further include a third end portion 513.

The third end portion 513 may be a side end region of the guide body 510 that is arranged inside the vent hole 221 to face an inner surface of the vent hole 221. Here, the inner surface of the vent hole 221 may be an inner region of the cap plate 220 that is arranged to be around (*e.g.,* surround) a circumferential surface of the vent hole 221.

The third end portion 513 may be in contact with the inner surface of the vent hole 221. The third end portion 513 may be pressed to the inner surface of the vent hole 221 or may be fixed to the inner surface of vent hole 221 through a separate adhesive and/or the like. Accordingly, the guide body 510 may stably maintain its upright position on the vent member 300 before the blocking member 400 is injected into the vent hole 221.

The battery module according to one or more embodiments may further include a bus bar holder 30 and a holder vent hole 40.

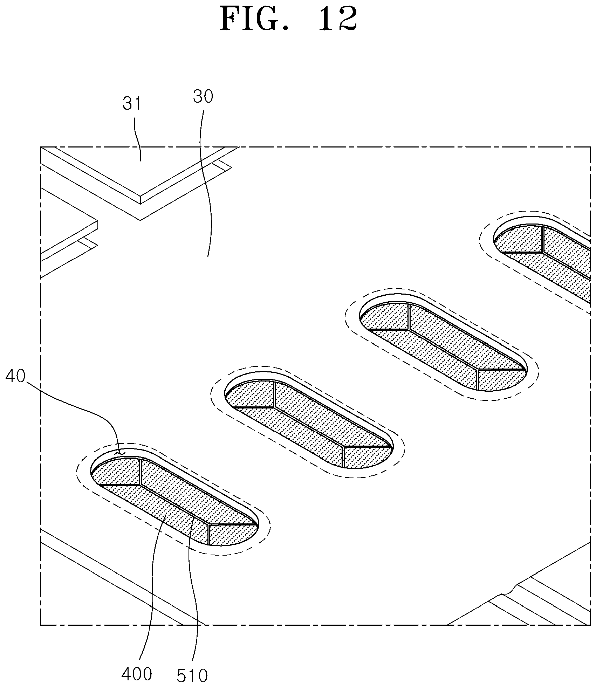

As shown, for example, in FIGS. 1 and 12, the bus bar holder 30 may be arranged inside the housing 10 and may function as a component that supports the bus bar 31.

FIG. 12 is an enlarged view schematically illustrating a configuration of the bus bar holder 30 and the holder vent hole 40 according to one or more embodiments of the present disclosure.

Referring to FIGS. 1 and 12, the bus bar holder 30 according to one or more embodiments may have, e.g. may be formed to have, the shape of a flat plate. Upper and lower surfaces of the bus bar holder 30 may be arranged to face the housing cover 12 and an upper surface of the battery cell 20, for example, the cap plate 220, respectively. The bus bar holder 30 may include an electrically insulating polymer compound material.

The bus bar 31 may be electrically connected to the battery cell 20. The bus bar 31 may be fixed to the bus bar holder 30 by one or more suitable types (kinds) of coupling methods such as welding, bolting, fitting, and/or the like. The bus bar 31 may be in contact with the cell terminals 230 of the battery cell 20. The bus bar 31 may include a conductive material such as aluminum, nickel, copper, and/or the like so that the bus bar 31 can be electrically connected to the cell terminal 230.

The bus bar 31 may be provided as a plurality of bus bars 31. The plurality of bus bars 31 may connect the plurality of battery cells 20 in series or in parallel. The number and arrangement of the plurality of bus bars 31 may be adapted depend on the series and/or parallel connection structures of the battery cells 20.

The holder vent hole 40 may function as a component that provides a discharge path for gas, flames, smoke, and/or the like, discharged from the battery cell 20, to the bus bar holder 30. The holder vent hole 40 according to one or more embodiments may have, e.g. may be formed to have, the shape of a hole passing through the bus bar holder 30. The holder vent hole 40 may be arranged to face the vent hole 221 of the battery cell 20.

The holder vent hole 40 may be provided as a plurality of holder vent holes 40. The plurality of holder vent holes 40 may be arranged in the longitudinal direction of the housing 10. The number of holder vent holes 40 may be formed to correspond to the number of battery cells 20. The respective holder vent holes 40 may be arranged to face the vent holes 221 of the respective battery cells 20.

A cross-sectional area of the holder vent hole 40 may be smaller than the cross-sectional area of the vent hole 221 of the battery cell 20. Accordingly, the bus bar holder 30 may prevent or reduce the likelihood of the blocking member 400 from being separated from the vent hole 221 during normal operation of the battery cell 20 by pressing an edge region of the blocking member 400.

Hereinafter, an alternative battery module according to one or more embodiments of the present disclosure will be described.

The battery module may be configured to differ only in the configurations of the battery module and the guide member 500 described with reference to FIGS. 1 to 12.

Accordingly, in describing the battery module according to one or more embodiments below, only the detailed configuration of the guide member 500, which is different from that in the battery module according to the above-described embodiments of the present disclosure, will be described.

The description of the battery module according to the above-described embodiments of the present disclosure may be equally applied to the remaining components of the battery module according to the following embodiments.

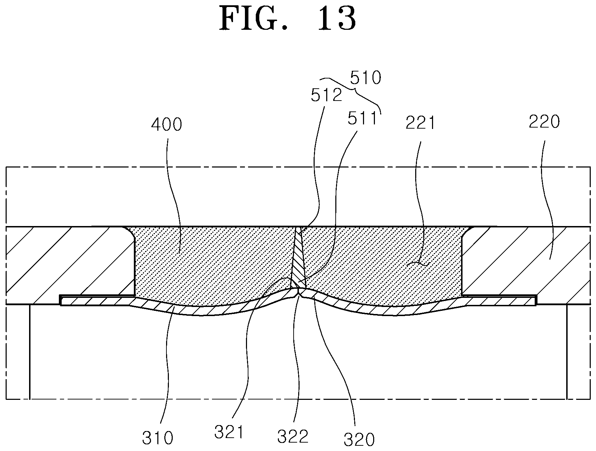

FIG. 13 is a cross-sectional view schematically illustrating a configuration of the alternative guide member 500 according to one or more embodiments of the present disclosure.

Referring to FIG. 13, a guide body 510 according to one or more embodiments may have, e.g. may be formed to have, a width that increases from the second end portion 512 towards the first end portion 511. For example, the guide body 510 crossing an extension direction of the cut-off line 321 may have, e.g. may be formed to have, a shape in which the width thereof gradually increases toward the vent member 300. Accordingly, the guide body 510 may more stably maintain its upright position on the vent member 300 before the blocking member 400 is injected into the vent hole 221.

Hereinafter, a further alternative battery module according to one or more embodiments of the present disclosure will be described.

The further alternative battery module may be configured to differ only in a connection relationship between the battery module, the vent member 300, and the guide member 500 according to the above-described embodiments of the present disclosure.

Accordingly, in describing the battery module, only the connection relationship between the vent member 300 and the guide member 500, which is different from that in the battery module according to the above-described embodiments of the present disclosure, will be described.

The description of the battery module according to above-described embodiments of the present disclosure may be equally applied to the remaining components of the battery module according to following embodiments.

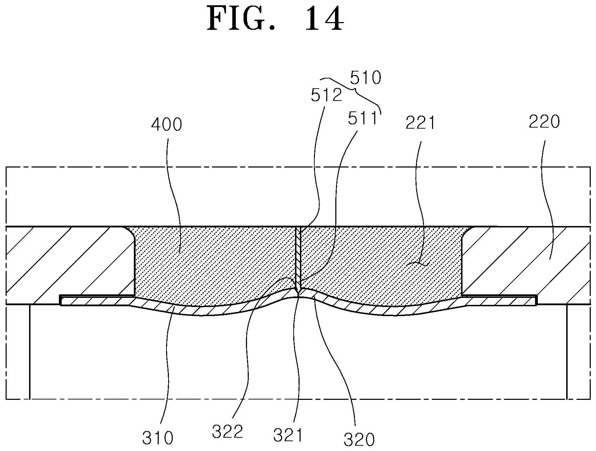

FIG. 14 is a cross-sectional view schematically illustrating a configuration of the further alternative guide member 500 according to one or more embodiments of the present disclosure.

FIG. 14 illustrates an example in which the width of the guide body 510 remains constant from the second end portion 512 toward the first end portion 511, but the guide body 510 is not limited thereto, and the width of the guide body 510 may increase from the second end portion 512 toward the first end portion 511 as illustrated in FIG. 13.

Referring to FIG. 14, the notch 322 according to one or more embodiments may be formed to be concavely recessed downward from an upper surface of the cut-off portion 320. For example, the notch 322 may be arranged on an upper side of the cut-off line 321 and arranged to face the first end portion 511 of the guide body 510 vertically.

The first end portion 511 of the guide body 510 may be inserted into the notch 322. Accordingly, the guide body 510 may more stably maintain its upright position on the vent member 300 before the blocking member 400 is injected into the guide body 510. A width of the upper end portion of the notch 322 may be greater than a width of the first end portion 511 so that the first end portion 511 can be inserted more smoothly.

Hereinafter, a further alternative battery module according to one or more embodiments of the present disclosure will be described.

The battery module may be configured to differ only in the configurations of the battery module and the guide member 500 according to above-described embodiments of the present disclosure.

Accordingly, in describing the battery module according to one or more embodiments below, only the configuration of the guide member 500, which is different from that in the battery module according to above-described embodiments of the present disclosure, will be described.

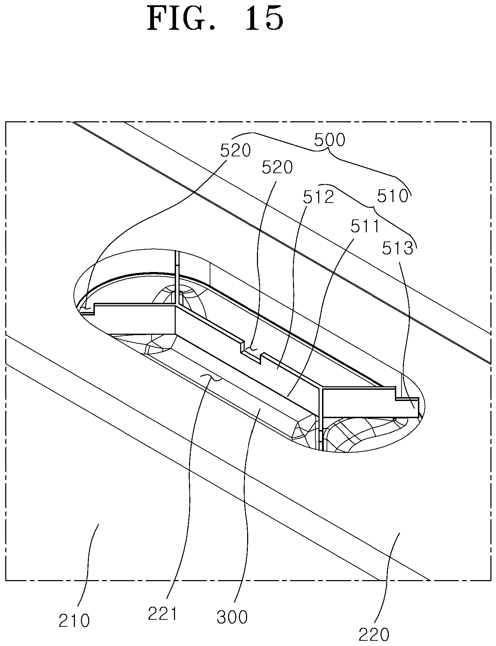

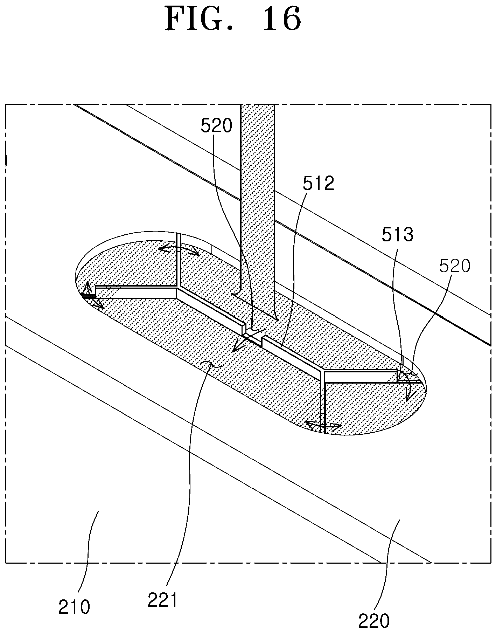

FIG. 15 is a perspective view schematically illustrating a configuration of the further alternative guide member according to one or more embodiments of the present disclosure, and FIG. 16 is a view schematically illustrating a state in which the blocking member 400 is injected into the vent hole 221 including the guide member of FIG. 15, according to one or more embodiments of the present disclosure.

Referring to FIGS. 15 and 16, the guide member 500 may further include a dispersion hole 520.

The dispersion hole 520 may function as a component that disperses the blocking member 400, which is injected into the vent hole 221 in a liquid state, throughout the vent hole 221.

The dispersion hole 520 according to one or more embodiments may have, e.g. may be formed to have, the shape of a hole that is formed to pass through the guide body 510. The dispersion hole 520 may pass through the guide body 510 in a width direction of the guide body 510 crossing the extension direction of the cut-off line 321. Accordingly, in the process of injecting the blocking member 400 into the vent hole 221, the blocking member 400 may be uniformly (*e.g.,* substantially uniformly) dispersed into different internal spaces of the vent hole 221 that are divided by the guide body 510 through the dispersion hole 520.

The dispersion hole 520 may be provided as a plurality of dispersion holes 520. The plurality of dispersion holes 520 may be arranged to be spaced and/or apart (*e.g.,* spaced apart or separated) from each other in the extension direction of the guide body 510. For example, the plurality of dispersion holes 520 may be individually arranged in the third end portion 513 of the guide body 510 and a central portion of the guide body 510 as illustrated in FIG. 15. The number, cross-sectional shape, position, and/or the like of the dispersion holes 520 are not limited to those illustrated in FIG. 15, and the number, cross-sectional shape, position, and/or the like of the dispersion holes 520 may be adapted depending on the size and shape of the guide body 510.

Hereinafter, a further alternative battery module according to one or more embodiments of the present disclosure will be described.

The battery module may be configured to differ only in the configurations of the battery module and the guide member 500 according to above described embodiments of the present disclosure.

Accordingly, in describing the battery module according to one or more embodiments below, only the configuration of the guide member 500, which is different from that in the battery module according to above-described embodiments of the present disclosure, will be described.

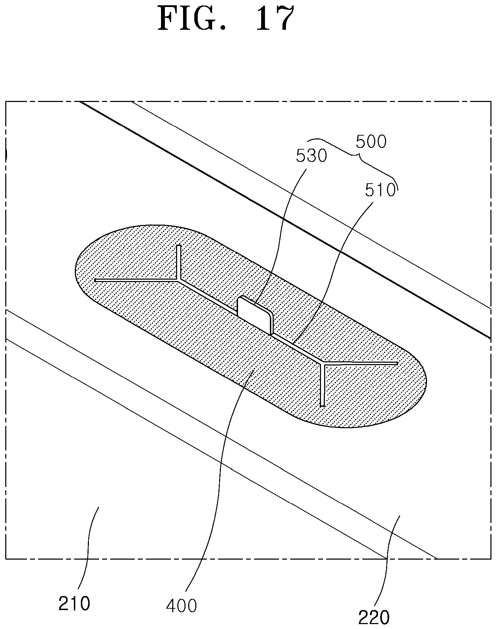

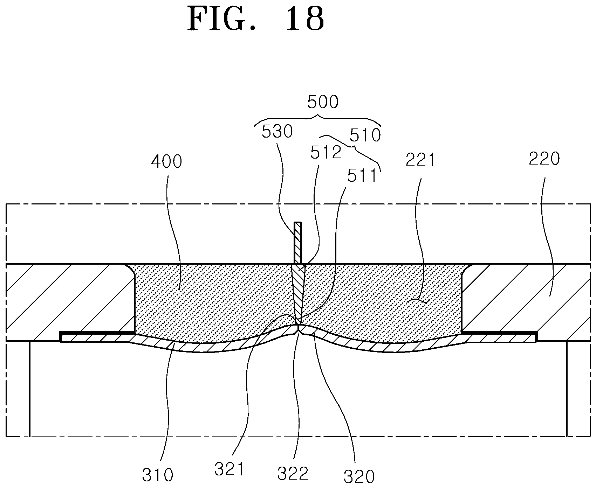

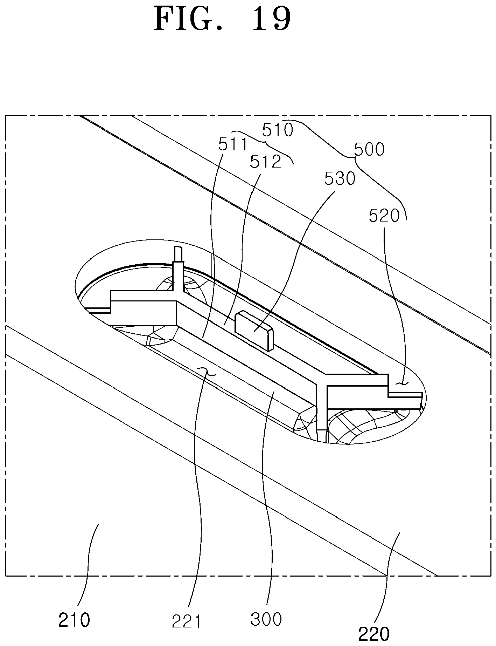

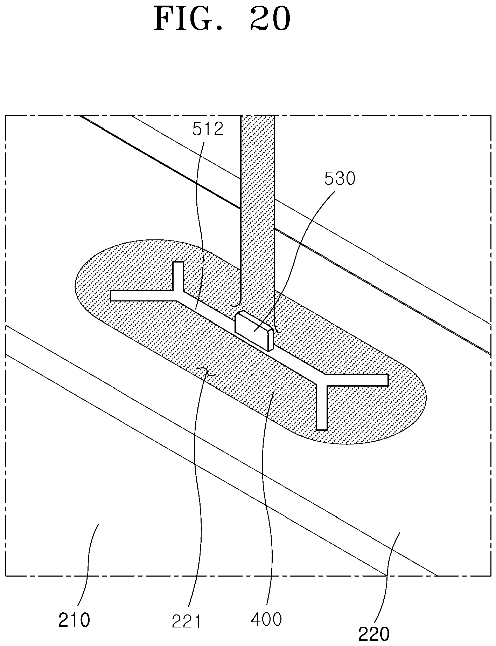

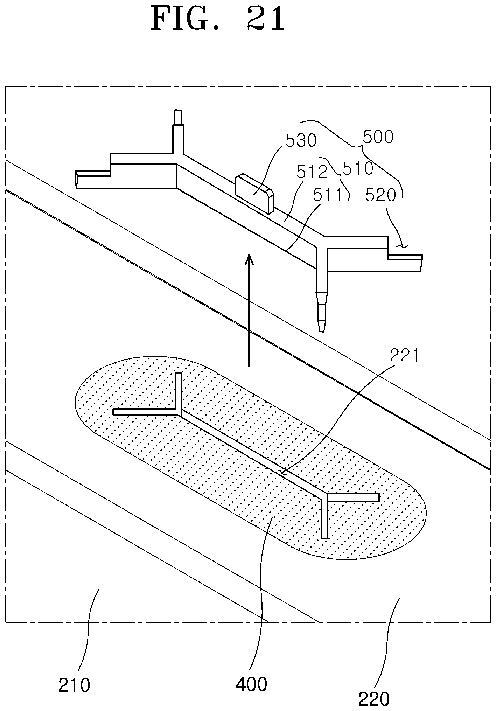

FIG. 17 is a perspective view schematically illustrating a configuration of the further alternative guide member 500 according to one or more embodiments of the present disclosure, FIG. 18 is a cross-sectional view schematically illustrating the configuration of the guide member 500 of FIG. 17, according to one or more embodiments of the present disclosure, FIGS. 19 and 20 are views schematically illustrating a process of injecting the blocking member 400 into the vent hole 221 including the guide member 500 of FIG. 17, according to one or more embodiments of the present disclosure, and FIG. 21 is a view schematically illustrating a state in which the guide member 500 is separated from the blocking member 400 according to one or more embodiments of the present disclosure.

FIGS. 17 to 21 illustrate an example in which the guide member 500 includes the dispersion hole 520, but the guide member 500 is not limited thereto, and the guide member 500 may be configured not to include the dispersion hole 520.

Referring to FIGS. 17 to 21, the guide member 500 according to one or more embodiments may be separated from the blocking member 400 after the blocking member 400 is cured. Accordingly, a cut groove may be formed in the blocking member 400 as large as the width of the guide member 500, and thus the blocking member 400 may be more easily opened based on the cut groove if (*e.g.,* when) the vent member 300 is opened.

In order to easily separate the guide member 500, the guide body 510 according to one or more embodiments may have, e.g. may be formed to have, a width that decreases from the second end portion 512 toward the first end portion 511. For example, the width of the guide body 510 crossing the extension direction of the cut-off line 321 may gradually decrease toward the vent member 300.

The guide member 500 according to one or more embodiments may further include a grip portion 530.

The grip portion 530 may function as a portion that is gripped by a user during the process of separating the guide member 500 from the blocking member 400. Accordingly, the grip portion 530 may allow the efficiency of the separation operation of the guide member 500 to be further improved.

The grip portion 530 according to one or more embodiments may extend from the second end portion 512 of the guide body 510 exposed to the outside of the blocking member 400. The grip portion 530 may protrude to the outside of the blocking member 400 by a set or predetermined distance or more. The shape of the grip portion 530 is not limited to those illustrated in FIGS. 17 to 21, and the shape of the grip portion 530 may be changed to one or more other suitable shapes that can be gripped by the user. A protrusion or other feature having an uneven shape to increase friction may be formed on a surface of the grip portion 530 to prevent or reduce slipping.

According to the present disclosure, if (*e.g.,* when) a fire occurs in any one battery cell 20, it is possible to prevent or reduce the likelihood that a plurality of the battery cells 20 will sequentially ignite due to flames, gas, smoke, and/or the like that is introduced into vent holes of the battery cells 20 adjacent to the battery cell 20 on fire by using a blocking member 400 that covers a vent plate 310.

According to the present disclosure, because blocking members 400 may be installed in each battery cell 20, if (*e.g.,* when) thermal runaway of any one battery cell 20 occurs, it is possible to prevent or reduce the likelihood that the blocking members 400 installed in other battery cells 20 (other than the ignited battery cell 20) will lift.

According to the present disclosure, if (*e.g.,* when) any one battery cell 20 ignites, it is possible to prevent or reduce the likelihood of the venting performance of the battery cell 20 from being lost by the blocking member 400 by guiding gas and/or the like generated from the ignited battery cell 20 to be discharged smoothly using the guide member 500.

According to embodiments of the present disclosure, because a cross-sectional shape of the guide body is formed to correspond to a cross-sectional shape of a cut-off line, it is possible to match an opening region of the blocking member with an opening region of a vent member.

According to the present disclosure, the guide body 510 can stably maintain its upright position inside a vent hole 221 by its cross-sectional shape, notch 322, or third end portion 513.

However, the effects obtainable through the present disclosure are not limited to the above effects, and other technical effects that are not mentioned will be understood by those skilled in the art from the following description of the present disclosure.

A portable device, vehicle, and/or the battery, *e.g.,* a battery controller, and/or any other relevant devices or components according to embodiments of the present disclosure described herein may be implemented utilizing any suitable hardware, firmware (*e.g.,* an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. A battery cell comprising:
an electrode assembly;
a cell case accommodating the electrode assembly, the cell case having a vent hole;
a vent member sealing the vent hole and configured and/or operable to be opened if an internal pressure of the cell case increases to a pressure equal to or exceeding a set or threshold pressure;
a blocking member installed in the vent hole and covering the vent member; and
a guide member installed in the vent hole and configured and/or operable to guide the blocking member to an open position if the vent member is opened.

2. The battery cell as claimed in claim 1, wherein the guide member comprises a guide body arranged inside the blocking member and has a first end portion in contact with the vent member and a second end portion opposite to the first end portion.

3. The battery cell as claimed in claim 2, wherein one of:
a thickness of the guide body increases from the second end portion towards the first end portion;
a thickness of the guide body decreases from the second end portion towards the first end portion.

4. The battery cell as claimed in claim 2 or 3, wherein the second end portion is exposed to an outside of the blocking member.

5. The battery cell as claimed in claim 2, 3 or 4, wherein the vent member comprises:
a vent plate fixed to the cell case and facing the vent hole; and
a cut-off portion on the vent plate and comprising a cut-off line to be cut-off if the internal pressure of the cell case increases, and
wherein the first end portion contacts the cut-off portion.

6. The battery cell as claimed in claim 5, wherein the first end portion faces the cut-off line and extends along the cut-off line.

7. The battery cell as claimed in claim 5 or 6, wherein the vent member further comprises a notch concavely recessed into the cut-off portion and extending along the cut-off line,
and wherein optionally the first end portion is inserted into the notch.

8. The battery cell as claimed in any one of claims 2 to 7, wherein the guide body further comprises a third end portion in contact with an inner surface of the vent hole.

9. The battery cell as claimed in any one of claims 2 to 8, wherein the blocking member is configured and/or operable to be injected into the vent hole in a liquid state and then cured,
and wherein optionally the blocking member comprises at least one of silicone, epoxy, urethane, or polyurethane.

10. The battery cell as claimed in claim 9, wherein the guide member is configured and/or operable to be separated from the blocking member after the blocking member is cured.

11. The battery cell as claimed in any preceding claim, wherein the guide member further comprises a dispersion hole passing through the guide body.

12. The battery cell as claimed in claim 11, wherein the dispersion hole is provided as a plurality of dispersion holes, and the plurality of dispersion holes are spaced from each other in an extension direction of the guide body.

13. The battery cell as claimed in any one of claims 2 to 12, wherein the guide member comprises a grip portion extending from the second end portion and protruding to the outside of the blocking member.

14. A battery module comprising:
a module housing; and
one or more battery cells inside the module housing,
wherein each of the battery cells comprises a battery cell according to any preceding claim.

15. The battery module as claimed in claim 14, further comprising:
a bus bar holder inside the module housing and supporting a bus bar connected to the battery cell; and
a holder vent hole passing through the bus bar holder and facing the vent hole,
and wherein optionally a cross-sectional area of the holder vent hole is smaller than a cross-sectional area of the vent hole.
